# FASCICULE DE BREVET EUROPEEN

(11) **EP 2 261 144 B1**
(45) Date de publication et mention de la délivrance du brevet: **13.02.2013**
(21) Numéro de dépôt: 10305620.6
(22) Date de dépôt: 10.06.2010
(51) Int. Cl.: B65G 21/00, B65G 21/08

(54) **Convoyeur à bande et procédé de montage de ce convoyeur à bande**
Bandförderer und Montageverfahren dieses Bandförderers
Belt conveyor and method for assembling said belt conveyor

(30) Priorité: 11.06.2009 FR 0953870
(43) Date de publication de la demande: 15.12.2010
(73) Titulaire: Brunone, René, 27950 Saint Marcel (FR)
(72) Inventeur: Brunone, René, 27950 Saint Marcel (FR)
(74) Mandataire: Domenego, Bertrand

(56) Documents cités:
- FR-A- 712 291
- FR-A1- 2 876 087
- JP-A- 10 212 036
- US-A- 3 065 843
- US-A- 4 524 864

## Description

La présente invention concerne un convoyeur à bande, notamment pour le convoyage de matériaux. Un tel convoyeur est habituellement utilisé dans des carrières ou dans des zones de construction, pour le transport de matériaux sur une distance généralement longue.

A cet effet, le convoyeur comporte une bande de convoyage sans fin, destinée à porter les matériaux. Cette bande de convoyage forme une boucle présentant un brin de transport, sur lequel sont entreposés les matériaux, et un brin de retour.

Du fait de sa fonction de convoyage d'une grande quantité de matériaux sur une distance relativement longue, un tel convoyeur à bandes est généralement encombrant et contraignant pour l'environnement dans lequel il est agencé.

En particulier, un périmètre de sécurité est habituellement imposé autour du convoyeur afin d'éviter des accidents au cours de son fonctionnement. Par ailleurs, le convoyeur et son périmètre de sécurité réduisent la liberté de circulation dans leur environnement, puisqu'il est nécessaire de les contourner pour passer d'un coté à l'autre du convoyeur.

JP 10 212036 décrit un exemple de convoyeur similaire à celui défini dans le préambule de la revendication 1.

L'invention a notamment pour but de remédier à ces inconvénients en fournissant un convoyeur à bandes dont les contraintes pour son environnement sont réduites, sans réduire son efficacité.

A cet effet, l'invention concerne un convoyeur à bande, notamment pour le convoyage de matériaux de construction, du type comportant au moins une bande de convoyage, deux parois latérales disposées longitudinalement de part et d'autre de la bande de convoyage, un tablier propre à supporter un véhicule automobile, disposé au dessus de la bande de convoyage, et reposant sur les deux parois latérales, et au moins une station de support de la bande, du type comprenant un support portant un berceau de guidage de la bande, le tablier étant également supporté par le support.

Ainsi, le convoyeur forme un sarcophage à l'intérieur duquel la bande de convoyage transporte les matériaux, ce qui offre de nombreux avantages vis-à-vis de son environnement.

En particulier, les parois latérales et le tablier limitent l'accès à la bande de convoyage, ce qui permet de circuler à proximité du convoyeur, sans qu'il soit nécessaire de prévoir un périmètre de sécurité autour de ce convoyeur.

Par ailleurs, grâce au tablier, il est possible de circuler au-dessus du convoyeur, ce tablier pouvant former un support pour le passage d'animaux, de personnes ou même de véhicules automobiles, ce tablier étant adapté au poids d'un tel véhicule.

Le support de la station de support permet de supporter le tablier, ce qui permet de renforcer la structure du convoyeur, notamment renforcer le tablier, en particulier pour permettre le passage de véhicules lourds. Le fait que ce support de tablier soit formé par un support de berceau de bande permet de limiter le nombre d'éléments constituant le convoyeur, et ainsi faciliter son montage.

L'invention a également pour avantage de permettre la suppression d'une piste d'entretien habituellement aménagée à proximité du convoyeur. En effet, le tablier peut être utilisé comme piste d'accès à la bande de convoyage. Ainsi, on économise les coûts de réalisation et d'entretien d'une telle piste d'entretien.

Enfin, on notera que les parois latérales et le tablier, qui encadrent la bande de convoyage, constituent un écran réduisant les nuisances sonores dues au fonctionnement du convoyeur. En outre, ces parois latérales et ce tablier forment également un écran réduisant les émissions de poussières dues au convoyage de matériaux, par exemple de gravats.

Un convoyeur à bandes selon l'invention peut en outre comporter l'une ou l'autre des caractéristiques suivantes.
- La bande de convoyage forme une boucle présentant un brin aller de transport de matériaux et un brin retour, les brins aller et retour étant disposés l'un sur le côté de l'autre, entre les deux parois latérales. Un tel convoyeur, qui s'étend horizontalement plutôt que verticalement, est peu encombrant quant à sa hauteur. L'accès au tablier est donc relativement simple, ce qui facilite le passage d'un côté à l'autre du convoyeur. On notera que le brin retour peut également être chargé pour le transport de matériaux.
- Le convoyeur comporte des moyens formant pente, agencés entre le tablier et le sol. Ces moyens formant facilitent l'accès au tablier, en particulier pour un véhicule.
- Les parois latérales et le tablier sont en béton, de préférence en béton extrudé. De telles parois sont suffisamment solides pour supporter le passage d'objets lourds sur le tablier, notamment de véhicules automobiles.
- Les parois latérales sont au moins partiellement enterrées dans le sol. Le convoyeur ainsi assemblé étant enterré, au moins partiellement, dans le sol, son encombrement est réduit quant à sa hauteur, ce qui facilite l'accès au tablier. Par exemple, le convoyeur est entièrement enterré, réduisant ainsi au mieux son encombrement.

L'invention concerne également un procédé de montage d'un convoyeur à bandes tel que défini précédemment, comportant :
- une étape de creusage d'un conduit longitudinal dans le sol,
- une étape de montage des parois latérales et du tablier,
- une étape d'assemblage de la bande de convoyage dans le conduit longitudinal, comportant notamment l'assemblage d'au moins une station de support de la bande, du type comprenant un support portant un berceau de guidage de la bande, et
- une étape de montage du tablier, de sorte que le tablier repose sur les parois latérales et sur le support.

Le procédé comporte de préférence une étape d'agencement des moyens formant pente, par exemple en formant un monticule à l'aide de gravas ou d'autres matériaux.

L'invention sera mieux comprise à la lecture de la description qui va suivre, donnée uniquement à titre d'exemple et faite en se référant aux figures annexées, dont :
- la figure 1 est une vue en perspective d'un convoyeur à bandes selon un exemple de mode de réalisation de l'invention, dont un tablier n'est représentée que partiellement, et
- la figure 2 est une vue en coupe du convoyeur à bandes de la figure 1, sur laquelle circule un véhicule automobile.

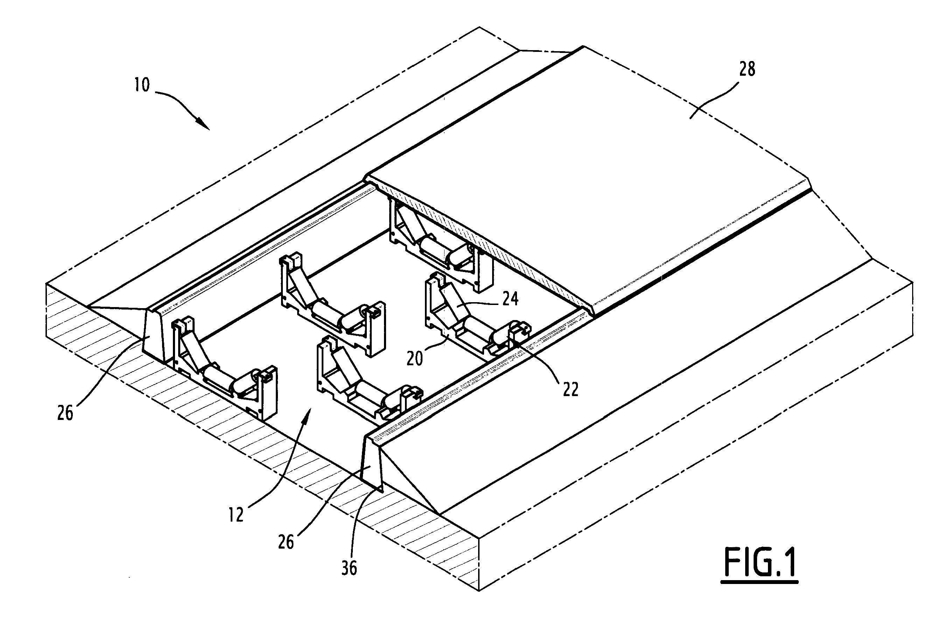

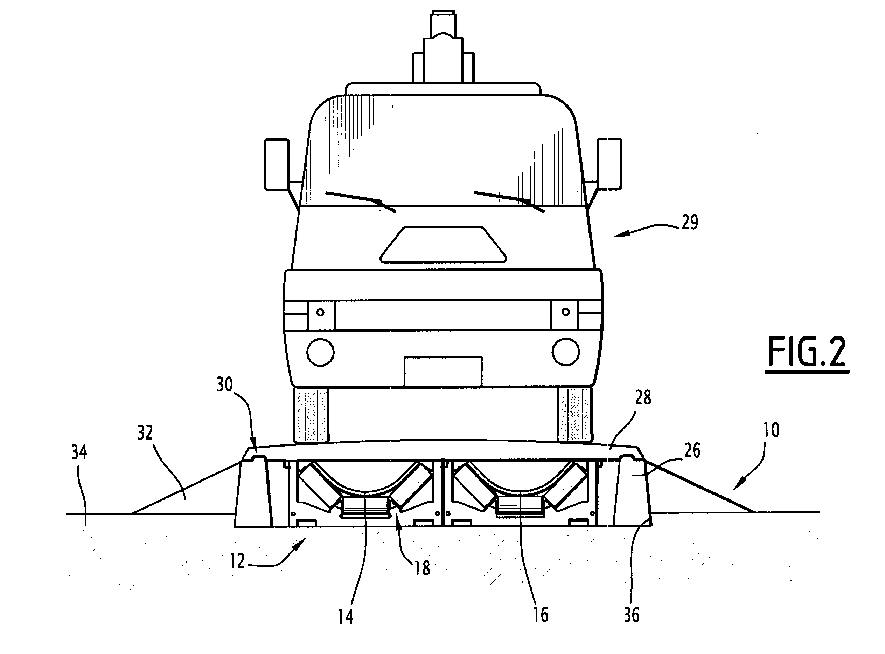

On a représenté sur les figures 1 et 2 un convoyeur à bandes selon un exemple de mode de réalisation de l'invention. Ce convoyeur à bandes est désigné par la référence générale 10.

Le convoyeur à bandes 10 comporte au moins une bande de convoyage 12, formant de façon classique une boucle présentant un brin aller de transport de matériaux 14 et un brin retour 16.

Conformément au mode de réalisation décrit, les brins aller 14 et retour 16 sont disposés l'un sur le côté de l'autre, de façon à limiter son encombrement quant à sa hauteur. De préférence, le brin retour 16 peut également être chargé pour le transport des matériaux.

La bande de convoyage 12 est supportée par des stations de support 18 de type classique, réparties le long de la bande 12. Chaque station de support 18 comporte un support 20, et un berceau de guidage 22 destiné à supporter la bande 12 et lié au support 20. Conformément à l'exemple représenté, le berceau de guidage 22 comporte des rouleaux de guidage 24. En variante, ce berceau de guidage pourrait comporter des patins de glissement.

Les stations de support 18 sont alignées, de façon à guider longitudinalement les brins aller 14 et retour 16 de transport.

Afin notamment de limiter l'accès aux brins aller 14 et retour 16 de transport, le convoyeur à bandes comporte deux parois latérales pleines 26 disposées longitudinalement de part et d'autre de la bande de convoyage 12, et un tablier 28 recouvrant la bande de convoyage 12 et reposant sur les deux parois latérales 26.

Le tablier 28 est réalisé en un matériau suffisamment résistant pour supporter le poids d'éventuels objets lourds, tels que des véhicules automobiles 29 circulant sur ce tablier 28, notamment afin de passer d'un coté à l'autre du convoyeur 10. Par exemple, le tablier 28 est en béton, de préférence extrudé.

De préférence, le tablier 28 comporte une pluralité de plaques de béton, d'environ 1 mètre dans la direction longitudinale du convoyeur, et d'environ 3 mètres dans la direction transversale de ce convoyeur, disposées les unes à coté des autres pour former le tablier 28. Ainsi, il suffit d'enlever l'une de ces plaques pour accéder au convoyeur, par exemple pour des raisons de maintenance.

On notera que, du fait que le tablier 28 est particulièrement lourd, ce tablier 28 est difficile à enlever sans disposer d'un matériel adapté, par exemple d'un matériel à bras hydraulique. On limite ainsi les risques d'accès à la bande de convoyage à des fins de vandalisme, de même que les risques d'accident en fonctionnement de la bande de convoyage.

Les parois latérales 26 sont également réalisées en un matériau suffisamment résistant pour supporter le poids du tablier 28, ainsi que des éventuels objets lourds circulant sur ce le tablier 28. De préférence, ces parois latérales sont réalisées en béton extrudé.

De manière optionnelle, les parois latérales 26 et le tablier 28 comportent des formes complémentaires d'emboîtement 30 assurant le maintien du tablier 28 sur les parois latérales 26.

Par ailleurs, les supports 20 des stations de support 18 sont conformés pour soutenir le tablier 28. Ces supports 20 comportent donc au moins une partie dont la hauteur est sensiblement égale à celle des parois latérales 26, afin que le tablier 28 puisse reposer au moins en partie sur ce support 20.

Les supports 20 sont également réalisés en un matériau suffisamment résistant pour supporter au moins en partie le poids du tablier 28, ainsi que des éventuels objets lourds circulant sur ce le tablier 28. De préférence, les supports 20 sont réalisés en béton, et sont par exemple du type décrit dans FR 2 876 087.

Le convoyeur à bandes 10 comporte également des moyens 32 formant une pente, agencés entre le tablier 28 et le sol 34. Cette pente 32 facilite l'accès au tablier 28, notamment pour des véhicules automobiles 29, et pour le passage d'un côté à l'autre du convoyeur 10.

On notera que le convoyeur à bandes 10 est de préférence réalisé à l'aide d'un procédé de montage comportant les étapes suivantes :
- une étape de creusage d'un conduit longitudinal 36 dans le sol 34,
- une étape de montage des parois latérales 26 et du tablier 28,
- une étape d'assemblage de la bande de convoyage 12 dans le conduit longitudinal 36, et
- une étape d'agencement des moyens formant pente 32, par exemple en formant un monticule à l'aide de gravas ou d'autres matériaux.

En enterrant ainsi le convoyeur 10 au moins partiellement dans le sol, et en le recouvrant du tablier 28, on en limite l'encombrement quant à sa hauteur. Par exemple, le convoyeur 10 pourrait être entièrement enterré, de sorte que son encombrement serait nul.

Ainsi, on facilite l'accès au tablier 28 pour un véhicule automobile, s'assurant ainsi que le convoyeur 10 n'impose pas de contraintes en ce qui concerne la circulation à sa proximité.

En outre, du fait de sa faible hauteur, le convoyeur 10 a un impact visuel limité.

En effet, l'invention permet d'obtenir un convoyeur de hauteur limitée, généralement de hauteur inférieure à 700 millimètres.

On notera que l'invention n'est pas limitée au mode de réalisation décrit, et pourrait comporter des modifications sans sortir du cadre des revendications.

En particulier, le convoyeur pourrait comporter d'autres éléments, notamment afin de faciliter sa maintenance.

Par exemple, on peut prévoir un rail s'étendant dans le convoyeur 10 en longeant une paroi latérale, sur lequel circulerait une caméra mobile le long du rail.

Cette caméra mobile permet de contrôler le bon état et le bon fonctionnement du convoyeur sur toute sa longueur.

## Revendications

1. Convoyeur à bande (10), notamment pour le convoyage de matériaux de construction, du type comportant au moins une bande de convoyage (12), deux parois latérales (26) disposées longitudinalement de part et d'autre de la bande de convoyage (12), un tablier (28) propre à supporter un véhicule automobile, disposé au dessus de la bande de convoyage (12), et reposant sur les deux parois latérales (26), et au moins une station (18) de support de la bande (12), du type comprenant un support (20) portant un berceau (22) de guidage de la bande, **caractérisé en ce que** le tablier (28) est également supporté par le support (20).

2. Convoyeur à bande (10) selon la revendication 1, dans lequel la bande de convoyage (12) forme une boucle présentant un brin aller de transport de matériaux (14) et un brin retour (16), les brins aller (14) et retour (16) étant disposés l'un sur le côté de l'autre, entre les deux parois latérales (26).

3. Convoyeur à bande (10) selon la revendication 1 ou 2, comportant des moyens (32) formant pente agencés entre le tablier (28) et le sol (34).

4. Convoyeur à bande (10) selon l'une quelconque des revendications précédentes, dans lequel les parois latérales (26) et le tablier (28) sont en béton, de préférence en béton extrudé.

5. Convoyeur à bande (10) selon l'une quelconque des revendications précédentes, dans lequel les parois latérales (26) sont au moins partiellement enterrées dans le sol.

6. Procédé de montage d'un convoyeur à bande (10) selon l'une quelconque des revendications précédentes, comportant :
- une étape de creusage d'un conduit longitudinal dans le sol,
- une étape de montage des parois latérales (26),
- une étape d'assemblage de la bande de convoyage (12) dans le conduit longitudinal, comportant notamment l'assemblage d'au moins une station (18) de support de la bande (12), du type comprenant un support (20) portant un berceau (22) de guidage de la bande,
- une étape de montage du tablier (24), de sorte que le tablier (24) repose sur les parois latérales (26) et sur le support (20).

7. Procédé de montage selon la revendication 6, comportant une étape d'agencement de moyens (32) formant pente, en amoncelant un monticule à l'aide de gravats ou d'autres matériaux.

## Claims

1. Belt conveyor (10), in particular for conveying construction materials, of the type comprising at least one conveyor belt (12), two side walls (26) arranged longitudinally on either side of the conveyor belt (12), an apron (28) suitable for supporting a motor vehicle arranged above the conveyor belt (12) and resting on the two side walls (26), and at least one support unit (18) for the belt (12) comprising a support (20) bearing a guide cradle (22) for the belt, **characterised in that** the apron (28) is also supported by the support (20).

2. Belt conveyor (10) according to claim 1, in which the conveyor belt (12) forms a loop having a forward strand for transport of materials (14) and a return strand (16), wherein the forward (14) and return (16) strands are arranged side by side between the two side walls (26).

3. Belt conveyor (10) according to claim 1 or 2, comprising sloping means (32) arrange between the apron (28) and the ground (34).

4. Belt conveyor (10) according to any one of the preceding claims, in which the side walls (26) and the apron (28) are made of concrete, preferably extruded concrete.

5. Belt conveyor (10) according to any one of the preceding claims, in which the side walls (26) are embedded at least partially in the ground.

6. Process for assembling a belt conveyor (10) according to any one of the preceding claims, comprising:
• a step of digging a longitudinal conduit in the ground;
• a step of erecting the side walls (26);
• a step of assembling the conveyor belt (12) in the longitudinal conduit, comprising in particular the assembly of at least one support unit (18) for the belt (12) comprising a support (20) bearing a guide cradle (22) for the belt;
• a step of assembling the apron (24) such that the apron (24) rests on the side walls (26) and on the support (20).

7. Assembly process according to claim 6, comprising a step of arranging sloping mean (32) by building up a mound using rubble or other materials.

## Patentansprüche

1. Bandförderer (10), insbesondere zum Fördern von Baumaterial, von der Art, die mindestens ein Förderband (12), zwei Seitenwände (26), die in Längsrichtung auf beiden Seiten des Förderbands (12) angeordnet sind, eine Fahrbahn (28), die zum Tragen eines Kraftfahrzeugs geeignet ist, über dem Förderband (12) angeordnet ist und auf den zwei Seitenwänden (26) aufliegt, und mindestens eine Station (18) zum Tragen des Bands (12) von der Art aufweist, die eine Auflage (20) umfasst, die einen Träger (22) zum Führen des Bands trägt, **dadurch gekennzeichnet, dass** die Fahrbahn (28) ebenfalls von der Auflage (20) getragen wird.

2. Bandförderer (10) nach Anspruch 1, wobei das Förderband (12) eine Schleife bildet, die ein Hinlaufband für den Transport von Material (14) und ein Rücklaufband (16) bildet, wobei das Hinlaufband (14) und das Rücklaufband (16) nebeneinander zwischen den beiden Seitenwänden (26) angeordnet sind.

3. Bandförderer (10) nach Anspruch 1 oder 2, der Mittel (32) aufweiset, die eine Schräge bilden und zwischen der Fahrbahn (28) und dem Boden (34) angeordnet sind.

4. Bandförderer (10) nach einem der vorhergehenden Ansprüche, wobei die Seitenwände (26) und die Fahrbahn (28) aus Beton, vorzugsweise aus Extrudierbeton, sind.

5. Bandförderer (10) nach einem der vorhergehenden Ansprüche, wobei die Seitenwände (26) zumindest teilweise im Boden verlegt sind.

6. Montageverfahren eines Bandförderers (10) nach einem der vorhergehenden Ansprüche, umfassend:
- einen Schritt zum Anlegen eines längs verlaufenden Kanals im Boden,
- einen Schritt zum Aufstellen der Seitenwände (26),
- einen Schritt zum Montierten des Förderbands (12) in dem längs verlaufenden Kanal, der insbesondere das Montieren von mindestens einer Station (18) zum Tragen des Bands (12) von der Art umfasst, die eine Auflage (20) umfasst, die einen Träger (22) zum Führen des Bands trägt,
- einen Schritt zum Montierten der Fahrbahn (24), sodass die Fahrbahn (24) auf den Seitenwänden (26) und auf der Auflage (20) aufliegt.

7. Montageverfahren nach Anspruch 6, das einen Schritt zum Anordnen von Mitteln (32), die eine Schräge bilden, umfasst, indem mithilfe von Schutt oder anderem Material eine Erhebung aufgeschichtet wird.
